# EUROPÄISCHE PATENTANMELDUNG

(11) **EP 0 603 736 A1**
(43) Veröffentlichungstag der Anmeldung: **29.06.1994**
(21) Anmeldenummer: 93120247.7
(22) Anmeldetag: 16.12.1993
(51) Int. Cl.: C02F 9/00, C02F 1/24, C02F 3/28

(54) **Verfahren zum Aufbereiten von Wasch- und Reinigungswässern insbesondere von Kraftfahrzeugwaschanlagen an Tankstellen**

(30) Priorität: 23.12.1992 DE 4243651
(71) Anmelder: Parkner GmbH, D-45659 Recklinghausen (DE)
(72) Erfinder: Stuckmann, Otto, D-45657 Recklinghausen (DE); Sassin, Detlev, D-44319 Dortmund (DE)
(74) Vertreter: Masch, Karl Gerhard, Dr.

(57) **Zusammenfassung**

Zum Aufbereiten werden Wasch- und Reinigungswässer (1) insbesondere von Kraftfahrzeugwaschanlagen an Tankstellen in eine Flotationsstufe (2) mit Bodenräumung (3) eingeführt, deren Flotat (4) einer anaeroben Behandlungsstufe (5) zugeführt wird, in welcher die organischen Stoffe des Flotats (4) zumindest teilweise in Bio- oder Faulgas (6) umgesetzt werden, und deren Klarlauf (7) zum Waschen und Reinigen im Kreislauf zurückgeführt wird. Zum Verwerten der Bio- oder Faulgase (6) und/oder von an Tankstellen bei Betankungsvorgängen abgesaugten Kraftstoffdämpfen (14) können die Dämpfe (14) bzw. Gase (6) in einem thermoelektrischen Konverter (11) in Wärme (12) und elektrische Energie (13) umgesetzt werden. Die Wärme (12) wird zum Erwärmen eines Brauchwasserspeichers (16) eingesetzt, über den der Klarlauf (7) aus der Flotationsstufe (2) geführt ist.

## Beschreibung

Die Erfindung betrifft zunächst ein Verfahren zum Aufbereiten von Wasch- und Reinigungswässern oder dergleichen, insbesondere von Wasch- und Reinigungswässern von Kraftfahrzeugwaschanlagen an Tankstellen.

Bisher sind solche Wässer nach ihrer Verwendung - gegebenenfalls nach einer Ölabscheidung - in die öffentliche Kanalisation abgegeben worden.

Aufgabe der Erfindung ist die Aufbereitung von Wasch- und Reinigungsabwässern, insbesondere solcher von Kraftfahrzeugwaschanlagen an Tankstellen, um den Frischwasserverbrauch weitgehend zu vermindern und vorzugsweise eine Nutzung eventueller Energieinhalte zu ermöglichen.

Die erfindungsgemäße Lösung dieser Aufgabe besteht darin, daß die Wässer in eine Flotationsstufe mit Bodenräumung eingeführt werden, deren Flotat einer anaeroben Behandlungsstufe zugeführt wird, in welche die organischen Stoffe des Flotats zumindest teilweise in Bio- oder Faulgase umgesetzt werden, und deren Klarlauf zum Waschen und Reinigen im Kreislauf zurückgeführt wird.

Vorzugsweise arbeitet man mit einer Flotationseinheit, deren Eigenschaften es erlauben, den geforderten Wasserklarlauf ohne die Verwendung von Flockungsmitteln zu realisieren. Hierfür wird insbesondere eine Vorrichtung beispielsweise gemäß DE-PS 35 01 175 eingesetzt, die über eine Druckentspannung kleinste Luftbläschen - Durchmesser 20 bis 40, insbesondere ca. 30 Mikron - erzeugt, so daß über die Differenzen der Oberflächenpotentiale eine Austragung von Schwebstoffen möglich ist. Hierdurch ergeben sich geringere Betriebskosten infolge Einsparungen an Chemikalien, geringere Entsorgungskosten (die bisher entstehenden Waschschlämme beinhalten ca. 16 % Massenanteil, im wesentlichen hervorgerufen durch den Einsatz von Flockungsmitteln), aufgrund der zusätzlichen Bodenräumung eine Abscheidung von absetzbaren Feststoffen bzw. Feinabscheidung von "Straßendreck" und geringerer Wartungsaufwand durch den Einsatz einer mechanischen Flotation. Darüber hinaus erlaubt die Zusammensetzung des Flotats den Einsatz der anaeroben Behandlungsstufe. In dieser Behandlungsstufe werden die organischen Stoffe in Biogas bzw. Faulgas umgesetzt. Hierdurch wird eine Massenreduzierung der zu entsorgenden Feststoffe um ca. 50 % erreicht und zugleich entstehen ca. 0,3 m³ Biogas mit einem mittleren Heizwert von 5500 kcal/m³ und kg Trockenmasse Organik.

Für die Optimierung der Reststoffe stehen zwei Wege offen: Zum einen können durch den Zusatz von Bentoniten die Reststoffe gebunden und somit die Entsorgung unproblematischer gemacht werden. Zum anderen kann der anaeroben Behandlungsstufe eine aerobe Schlammbehandlungsstufe nachgeschaltet werden. So können in der anaeroben Stufe die organischen Bestandteile bis auf ca. 10 % abgebaut werden und in der aeroben Stufe können dann die hochverflüssigten Schlämme behandelt und anschließend ein zweites Mal flotiert werden, wodurch die Entsorgungsmassen auf ca. 10 % reduzierbar sind. Die anfallenden Waschschlämme können durch ein Servicefahrzeug endbehandelt werden. Dieses Fahrzeug wird mit einem Dekanter und einem Trockner ausgestattet sein; hierdurch wird erreicht, daß für die Entsorgung ein inertes Trockengranulat zur Verfügung steht. Je nach Verfahrensführung ist dieses Granulat entweder mit einem nutzbaren Brennwert oder deponiefähig gestaltbar. Wird das Verfahren auf nutzbaren Brennwert eingestellt, so bietet sich die Verwendung des Granulates als Zusatzstoff für eine Kraftwerksfeuerung bzw. als Grundsubstanz zur Synthesegaserzeugung an. Wird mit geringem Brennwert gefahren, so kann durch den Zusatz von Bentoniten die Entsorgung im Bereich "Bauschutt" verwirklicht werden.

Gegenstand der Erfindung ist auch ein Verfahren zum Verwerten von an Tankstellen bei Betankungsvorgängen abgesaugten Kraftstoffdämpen und/oder von Bio- oder Faulgasen, insbesondere aus der anaeroben Behandlungsstufe des zuvor beschriebenen Aufbereitungsverfahrens. Hier lehrt die Erfindung, daß die Kraftstoffdämpfe und/oder Bio- oder Faulgase in einem thermoelektrischen Konverter vorzugsweise in Form einer Stirlingmaschine (insbesondere nach DE-PS 38 34 070, 38 34 071 und/oder 38 34 072) in Wärme und elektrische Energie umgesetzt werden. Insoweit geht die Erfindung zunächst von der Erkenntnis aus, daß der Energieinhalt der in der anaeroben Behandlungsstufe entstehenden Bio- oder Faulgase optimal genutzt werden kann, wenn diese in einem themoelektrischen Konverter umgesetzt werden. Außerdem erlaubt ein solcher thermoelektrischer Konverter auch die Umsetzung und optimale Außennutzung von bei Betankungsvorgängen an Tankstellen entstehenden Benzindämpfen, die zumindest in Deutschland seit einiger Zeit nicht mehr in die Atmosphäre entweichen dürfen, sondern abgesaugt werden müssen. Hieraus läßt sich im Ergebnis ein energetisch optimales Tankstellenkonzept realisieren. Alles das ist besonders günstig, wenn wie nach bevorzugter Ausführungsform die vom thermoelektrischen Konverter abgegebene Wärme zum Erwärmen eines Brauchwasserspeichers eingesetzt wird. In diesem Zusammenhang empfiehlt es sich, den Klarlauf aus der Flotationsstufe zumindest teilweise über den Brauchwasserspeicher zurückzuführen, wodurch eine Warmwasserwäsche mehr als rentabel wird.

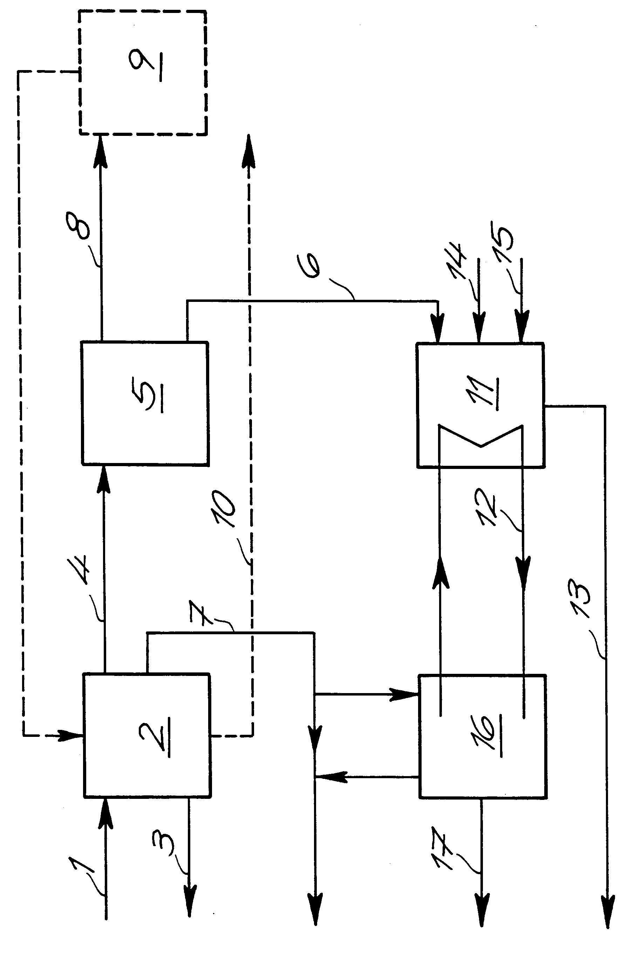

Im folgenden wird die Erfindung anhand der beiliegenden Zeichnung erläutert, die das erfindungsgemäße Verfahren in schematischer Darstellung zeigt.

Zum Aufbereiten von Wasch- und Reinigungswässern 1 von Kraftfahrzeugwaschanlagen an Tankstellen werden die Wässer 1 in eine mit praktisch ausschließlicher Zuführung von Luft und Erzeugung von Luftbläschen einer Größe von 20 bis 40 Mikron arbeitende Flotationsstufe 2 mit Bodenräumung 3 eingeführt. Das Flotat 4 aus der Flotationsstufe 2 wird einer anaeroben Behandlungsstufe 5 zugeführt, in welcher die organischen Stoffe des Flotates 4 zumindest teilweise in Bio- oder Faulgase 6 umgesetzt werden. Der Klarlauf 7 aus der Flotationsstufe 2 wird zum Waschen und Reinigen im Kreislauf zurückgeführt. Das in der anaeroben Behandlungsstufe 5 behandelte Flotat 8 kann anschließend unmittelbar verfestigt werden. Eine Alternative ist in der Figur durch Strichelung angedeutet; hier wird das in der aneroben Behandlungsstufe 5 behandelte Flotat 8 anschließend über eine aerobe Behandlungsstufe 9 geführt und danach in die Flotationsstufe 2 rückgeführt; dem Kreislauf zu entziehendes Wasser 10 wird aus der Flotationsstufe 2 entfernt.

Die in der anaeroben Behandlungsstufe 5 entstehenden Bio- oder Faulgase 6 werden in einem thermoelektrischen Konverter 11 in Form einer Stirlingmaschine in Wärme 12 und elektrische Energie 13 umgesetzt. Diesem thermoelektrischen Konverter 11 können auch die bei Betankungsvorgängen an Tankstellen abgesaugten Kraftstoffdämpfe 14 und ggf. auch noch Erdgas 15 zugeführt werden. Die vom thermoelektrischen Konverter 11 abgegebene Wärme 12 dient zum Erwärmen eines Brauchwasserspreichers 16, über den der Klarlauf 7 aus der Flotationsstufe 2 zumindest teilweise geführt ist, um das für erneute Waschvorgänge zur Verfügung zu stellende Wasser zu erwärmen. Aus dem Brauchwasserspeicher 16 könnte auch für Beheizungszwecke zur Verfügung zu stellendes Warmwasser 17 abgegeben werden.

Der beschriebene thermoelektrische Konverter 11 kann auch allein für die Umsetzung von bei Betankungsvorgängen abgesaugten Kraftstoffdämpfen 14 eingesetzt werden, wobei das Warmwasser 17 des Brauchwasserspeichers 16 dann zur Beheizung von Tankstellenräumen und die elektrische Energie zum Betrieb der Tankstelle einsetzbar ist. Der zusätzliche Einsatz von Erdgas 15 oder anderen Brennstoffen ist dann natürlich auch noch möglich.

## Patentansprüche

1. Verfahren zum Aufbereiten von Wasch- und Reinigungswässern (1) oder dergleichen, insbesondere von Wasch- und Reinigungswassern von Kraftfahrzeugwaschanlagen an Tankstellen, **dadurch gekennzeichnet**, daß die Wässer (1) in eine Flotationsstufe (2) mit Bodenräumung (3) eingeführt werden, deren Flotat (4) einer anaeroben Behandlungsstufe (5) zugeführt wird, in welcher die organischen Stoffe des Flotats (4) zumindest teilweise in Bio- oder Faulgase (6) umgesetzt werden, und deren Klarlauf (7) zum Waschen und Reinigen im Kreislauf zurückgeführt wird.

2. Verfahren nach Anspruch 1, dadurch gekennzeichnet, daß in der Flotationsstufe (2) Luftbläschen einer Größe von 20 bis 40 Mikron erzeugt werden.

3. Verfahren nach Anspruch 1 oder 2, dadurch gekennzeichnet, daß das in der anaeroben Behandlungsstufe (5) behandelte Flotat (8) anschließend über eine aerobe Behandlungsstufe (5) geführt und danach in die Flotationsstufe (2) zurückgeführt wird.

4. Verfahren zum Verwerten von an Tankstellen bei Betankungsvorgängen abgesaugten Kraftstoffdämpfen (14) und/oder von Bio- oder Faulgasen (6), insbesondere aus der anaeroben Behandlungsstufe (5) des Verfahrens nach einem der Ansprüche 1 bis 3, dadurch gekennzeichnet, daß die Kraftstoffdämpfe (14) und/oder Bio- oder Faulgase (6) in einem thermoelektrischen Konverter (11) in Wärme (12) und elektrische Energie (13) umgesetzt werden.

5. Verfahren nach Anspruch 4, dadurch gekennzeichnet, daß als thermoelektrischer Konverter (11) eine Stirlingmaschine eingesetzt wird.

6. Verfahren nach Anspruch 4 oder 5, dadurch gekennzeichnet, daß die vom thermoelektrischen Konverter (11) abgegebene Wärme (12) zum Erwärmen eines Brauchwasserspeichers (16) eingesetzt wird.

7. Verfahren nach Anspruch 6, dadurch gekennzeichnet, daß der Klarlauf (7) aus der Flotationsstufe (2) zumindest teilweise über den Brauchwasserspeicher (16) zurückgeführt wird.
